# EUROPEAN PATENT APPLICATION

(11) **EP 4 726 586 A1**
(43) Date of publication of application: **15.04.2026**
(21) Application number: 24206219.8
(22) Date of filing: 11.10.2024
(51) Int. Cl.: G06F 21/55, H04L 9/40, H04W 4/40

(54) **SYSTEM, VEHICLE AND METHOD FOR VEHICLE ATTACK MITIGATION**

(71) Applicant: NXP B.V., 5656 AG Eindhoven (NL)
(72) Inventor: Khullar, Naman, 5656 AG Eindhoven (NL); Haslinger, Dorian, 5656 AG Eindhoven (NL); Manninger, Marc, 5656 AG Eindhoven (NL)
(74) Representative: Krott, Michel

(57) **Abstract**

A system (200, 300), method and vehicle are arranged to identify an attack on a software defined vehicle, SDV comprising a central controller (212) having a host processor (217); a security secure element, SE, (214) with an attack counter, AC, (216). The AC counts a number of SDV attacks in response to a sensor input and the security SE generates encrypted attack logs in response to the count. A secure backend cloud server (220) forms a secure wireless connection with the central controller and decrypts encrypted attack logs. The central controller wirelessly forwards the generated encrypted attack logs to the secure backend cloud server; and an Attack Evaluation Laboratory (230) analyses decrypted attack logs and in response thereto provides at least one attack-related recommendation to at least one of: the central controller, the security SE.

## Description

### Technical Field

The technical field relates to a system, a method for dynamic (real-time) configuration of a software defined vehicle (SDV) to counter and mitigate against attacks, and a SDV so adapted. The invention is applicable to, but not limited to, a system and a method for a configuration of SDVs with a detection algorithm in a Secure Element.

### Background

Some modern vehicles include a so-called 'Software Defined Vehicle' (SDV) architecture, which is used to provide various functionality for the vehicle that uses the SDV architecture, such as backend wireless connectivity to a mobile phone system, smart phone-based car access, etc. Many different applications inside a vehicle can depend on Secure Elements (SEs) for maintaining or enhancing the vehicle's system security, e.g., secure a communication connection between the vehicle and the internet. One of the important characteristic of SE is that it has a vehicle attack counter that records all type of attacks to the vehicle's electronics, along with the severity level of each attack. Each attack recorded by the SE can influence the behavior of an Automotive Application.

A SE is a secure operating system (OS), often provided in a tamper-resistant processor chip or secure component. The SE is often used to protect assets (root of trust, sensitive data, keys, certificates, applications) against high-level software (SW) and/or hardware (HW) attacks. Applications that process this sensitive data on an SE are isolated and so operate within a controlled environment that is generally not affected by software (including possible malware) found elsewhere on the OS (e.g., vehicle OS). Typically, the HW and embedded SW of the SEs is designed to meet the requirements of the Security IC Platform Protection Profile [PP 0084], including resistance to physical tampering scenarios.

SEs exist in various form factors, as devices such as smart cards, Universal Integrated Circuit Cards (UICCs), or smart microSD cards, or embedded, or integrated, as parts of larger devices. SEs are an evolution of the microchips employed in earlier smart cards, which have been adapted to suit the needs of numerous use cases, such as smartphones, tablets, set-top boxes, wearables, connected cars, and other internet of things (IoT) devices.

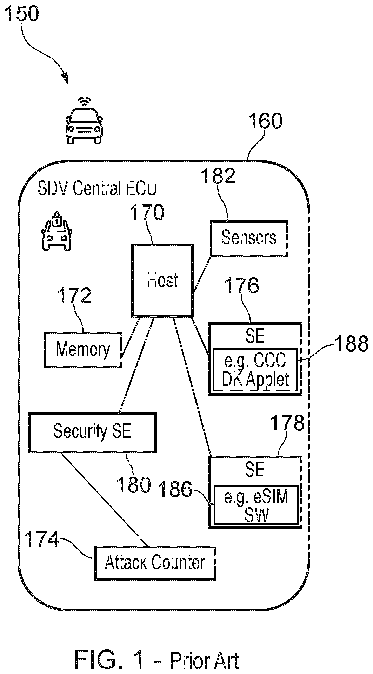

In the automotive field, it is recognised that there are a lot of opportunities for hackers to influence the functionality of a vehicle, typically attacking various electronics in a vehicle that include a mixture of various components, ranging from a Microcontroller to various sensors. FIG. 1 illustrates the development of a known software defined vehicle (SDV) 150, where the SDV 150 employs a communication/control system that combines many use cases and functionality within a powerful SDV central electronic control unit (ECU), which is considered to be the brain of a SDV. The general trend of SDVs enables more components and more functionality to be employed within a central ECU 160 inside a vehicle, often controlled by host processor 170. This evolution of a SDV 150 allows the host processor 170 to be connected to multiple devices and circuits, including multiple SEs, including in this illustration a smart access SE 176 to support digital key management with its CCC dynamic key (DK) applet 188, a connectivity SE 178 with an eSIM software (SW) applet 186. Other SEs may be used. Typically, the SDV ECU also contains one or more sensors 182, a memory 172 and a security SE 180, each connected to the host processor 170, with an attack counter (AC) 174 separately connected to the security SE 180.

It is the responsibility of the Security SE 180 to make sure that any unauthorized activity or tampering attempt is recorded. Based on the Security SE 180 feedback, protective actions are taken place accordingly. One of the important features for this activity is the AC 174. The AC 174 records these malicious attacks, and the Security SE 180 (sometimes with the host processor 170 takes necessary actions. However, since there are many variables/different conditions in the SDV 150, the AC 174 can ultimately cause a hindrance in the basic functionality, such as access to the SDV 150 via the smart access SE 176, which has been known to lead to vehicles being re-called. In a situation where the AC 174 reaches a predefined (count) limit, the Security SE 180 will enter a so-called 'restricted mode', which limits the functionality of the Security SE 180. In such a mode, the Security SE 180 will not boot up the complete (JavaCard) OS anymore, but only enable a very limited functionality, including the functionality to reset the AC using proper credentials. Hence, this opens up the SDV 150 to hackers. Thus, the inventors have recognized and appreciated that the AC 174 might ultimately lead to more problems than benefits, if not implemented and used efficiently. The inventors have also recognized and appreciated that addressing the security risks within an SDV can be very costly and complex to handle, not least due to the interactions between the many ECU circuits and functions.

Current known approaches for a Security SE are individually dedicated for specific security concerns. EP 3889865 A1 describes an approach that focuses on handling relay attacks using SE. US 10554670 B2 describes an approach that focuses on how SE can be used in a network. CN 113965404 B describes an approach that focuses on an adaptive mechanism for network security. Accordingly, there is a need for a system and a method for detecting an attack on a software-defined vehicle using a security SE, and a vehicle therefor.

### Summary of the invention

Examples herein described provide a system and a method for detecting an attack on a software-defined vehicle (SDV) using a security SE, and a SDV therefor, as described in the accompanying claims. Specific examples are set forth in the dependent claims. These and other aspects will be apparent from and elucidated with reference to the example embodiments described hereinafter.

### Brief description of the drawings

Further details, aspects and examples will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified high-level view of the configuring of a known software defined vehicle (SDV).
FIG. 2 illustrates one example of a simplified high-level view of a dynamic automotive attack counter configuration management system, according to some examples.
FIG. 3 illustrates a further example with a backend cloud server flowchart, according to some examples.
FIG. 4 illustrates one example of a flowchart for identifying an attack on a SDV, according to some examples.
FIG. 5 illustrates one example of a SDV, according to some examples.

### Detailed description

In some examples, one or more of the aforementioned problems may be alleviated using a dynamic automotive attack counter configuration management (DAACCM) system, which is designed to makes a better and more efficient use of the attack counter. The DAACCM system also provides a mechanism to adapt in a real-time manner, in accordance with a determined threat level, thereby providing an efficient usage of AC countermeasures in real time. In some examples, the system, with a Security SE and Attack Counter, is able to provide an improved determination of a real attack and is able to identify and assess false positive attacks. In some examples, the Security SE and Attack Counter is arranged to be compatible with a dynamic environment of a vehicle architecture and particularly adapted according to the SDV's current environment and needs. In some examples, detailed information about the attacks will be saved and can later be analysed for increasing the system security. In some examples, the Security SE and Attack Counter may be dynamically updated in the field, depending on the use case.

In a first aspect, a dynamic automotive attack counter configuration management (DAACCM) system is described that is arranged to detect a security threat on a SDV. The, system, method and vehicle are arranged to identify an attack on a software defined vehicle, SDV comprising a central controller having a host processor; a security secure element, SE, with an attack counter, AC. The AC is arranged to count a number of vehicle attacks in response to at least one sensor input and the security SE is arranged to generate encrypted attack logs in response to the count. A secure backend cloud server is arranged to form a secure wireless connection with the central controller and decrypt encrypted attack logs. The central controller is arranged to wirelessly forward the generated encrypted attack logs to the secure backend cloud server when it has a secure connection to the secure backend cloud server; and a server processor is arranged to analyse decrypted attack logs and in response thereto provide at least one attack-related recommendation to at least one of: the central controller, the security SE. In this manner, a system and a method for detecting an attack on a SDV using a security SE, and a SDV therefor are described that alleviate one or more of the problems in known approaches.

In some examples, it is envisaged that the server processor arranged to analyse decrypted attack logs and in response thereto provide at least one attack-related recommendation to at least one of: the central controller, the security SE, may reside in the secure backend cloud server or the secure backend cloud server forwards decrypted attack logs to an Attack Evaluation Laboratory that includes a processor arranged to analyse decrypted attack logs and in response thereto providing at least one attack-related recommendation to at least one of: the central controller, the security SE.

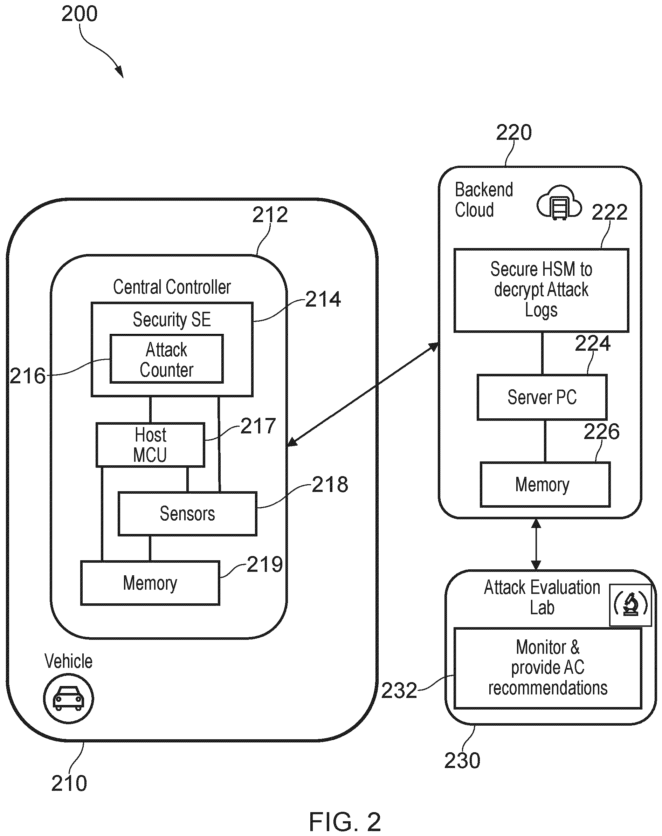

FIG. 2 illustrates one example of a simplified high-level view of a dynamic automotive attack counter configuration management (DAACCM) system 200, according to some examples. The DAACCM system 200 includes a SDV 210 with a central controller 212. The central controller 212 include a Security SE 214 that, in this example, includes an attack counter (AC) 216 arranged to count a number of vehicle attacks. In other examples, the Security SE 214 may be operably coupled to the AC 216. The Security SE 214 is connected to a host processor 217, which in turn is connected to a number of sensors 218 located around the SDV 210.

In some examples, the Security SE 214 may be connected direct to the number of sensors 218, which may include, in some examples, one or more of: a random access memory (RAM) parity sensor, a voltage glitch sensor, a light sensor, a low-high clock frequency sensor, a low-high temperature sensor, a low-high supply voltage sensor, etc. In some examples, the Security SE 214 may include the number of sensors 218. In some examples, the central controller 212 may may include other SEs (not shown). The AC 216 is arranged to count the number of potential safety attacks to the SDV 210, typically using inputs from the one or more sensors 218, where such attacks may encompass glitch attacks using extreme light conditions such as a flashlight, power supply manipulation, etc. In some examples the central controller 212 may be arranged to fetch encrypted logs from the Security SE 214, either periodically, or in response to a trigger (such as a request), or intermittently. In some examples the central controller 212 may be arranged to wirelessly forward the encrypted logs when it has a secure connection to a Secure Backend Cloud server 220. It is envisaged that such a backend connection to the Secure Backend Cloud server 220 may be via cellular or WiFi^{™}. In some examples, the central controller 212 is connected to other electronics. In some examples, the central controller 212 also includes memory 219, which may be connected to sensors 218 and the host processor 217.

In accordance with examples described herein, the security SE 214 may interpret or classify inputs received from the various sensors 218 and based on a number of attacks counted by the AC 216 in order to determine a severity of the attack(s). The security SE 214 then assesses the obtained information and determines, sometimes with assistance from the host processor 217, whether a detailed analysis of the current attack situation is needed.

In accordance with examples described herein, as illustrated, the central controller 212 is wirelessly connected to a Secure Backend Cloud server 220. The Secure Backend Cloud server 220 includes a secure hardware security module (HSM) 222, which is a physical computing device that is configured to safeguard and manage confidential information, performs encryption and decryption functions for digital signatures, strong authentication and other cryptographic functions, etc. In some examples, if the security SE 214 determines that a detailed analysis of the current attack situation is needed, the central controller 212 and the security SE 214 encrypt attack logs (including the value of the AC 216) and wirelessly send the encrypted attack logs to the Secure Backend Cloud server 220. The secure HSM 222 is arranged to decrypt the encrypted attack logs received from the Security SE 214 of the central controller 212 and store the decrypted attack log information in Cloud memory 226. The Secure Backend Cloud server 220 further includes, in this example, a server processor 224 (for example in a form of a personal computer (PC)), operably coupled to the secure HSM 222 and the Cloud memory 226.

In accordance with examples described herein, the Secure Backend Cloud server 220 is connected to an Attack Evaluation Laboratory 230. Known labs are configured to make a pre-evaluation of a product that wants to be security certified. In contrast, the described Attack Evaluation Laboratory 230 includes a processor 232 and has been modified and arranged to monitor and analyse attack logs, decrypted by the secure HSM and provide AC-related recommendations back to the central controller 212 and security SE 214. In accordance with some examples, the Secure Backend Cloud server 220 may include the Attack Evaluation Laboratory 230. In some examples, it is envisaged that the server processor 224 may be arranged to analyse the decrypted attack logs and in response thereto provide at least one attack-related recommendation to at least one of: the central controller, the security SE. As illustrated in FIG. 2, the processor arranged to analyse the decrypted attack logs may reside in a remoted Attack Evaluation Laboratory such that the secure backend cloud server forwards decrypted attack logs to the Attack Evaluation Laboratory that includes a processor arranged to analyse decrypted attack logs and in response thereto provides at least one attack-related recommendation to at least one of: the central controller, the security SE. It is envisaged that, in some examples, AC-related recommendations may include switching off the AC 216 temporarily, switching of the security SE 214 temporarily, providing a new or updated algorithm to be run by the AC 216 and/or the security SE 214, re-configuring a sensor or sensor threshold that is providing sensed data to the security SE 214, etc.

In accordance with examples described herein, the Secure Backend Cloud server 220 provides a secure infrastructure. In some examples, the secure HSM 222 may also be responsible for filtering out new or (deemed) irrelevant attacks, for example by comparing attack details with known previous attacks. In some examples, the secure HSM 222 or the server processor 224 is arranged to forward selected decrypted attack log information to the Attack Evaluation Laboratory 230 for further assessment The secure HSM 222 may also forward selected (and potentially filtered) attack log information to the Attack Evaluation Laboratory 230 for further assessment. In some examples, it is also envisaged that the secure HSM 222 may also be capable of creating attack counter 216 updates, which may be sent to the security SE 214 to modify the countermeasure as per the recommendations from the processor 232 of the Attack Evaluation Laboratory 230. In some examples, it is envisaged that the Attack Evaluation Laboratory 230 supports communications (via one or more input-output (I/O) ports). The processor 232 is arranged to, say, compare new data to existing data, where the existing data has been stored in a memory. In some examples, the processor 232 may include decision logic circuit or a decision function or a decision-making software program arranged to analyse input data and, in some instances, make a recommendation based on the analysed data, etc.

In accordance with examples described herein, the processor 232 of the Attack Evaluation Laboratory 230 may be arranged to receive additional information related to the different scenarios that led to the AC 216 increment. Accordingly, the processor 232 of the Attack Evaluation Laboratory 230 may be arranged to recommend new AC countermeasures, for example to either obtain more information regarding the potential threat that led to the potential attack suggested by the incremented AC 216, or in some instances decrease the countermeasures as the threat carries a low or negligible risk. In many instances, it is assumed that a countermeasure is only required in situations where there is a desire to reduce the risk.

In response to the AC 216 incrementing, and in more serious scenarios as identified by the security SE 214, a referral to the Secure Backend Cloud server 220 may be performed by either the host processor 217 or the security SE 214. In some examples, the processor 232 of the Attack Evaluation Laboratory 230 may be arranged to configure/propose a suitable countermeasure response according to different values of the AC 216, for example, according to the SDV 210 environment or a period of a vehicle lifecycle. For example, if the SDV 210 is determined as still being in a manufacturing stage, the AC 216 may be disabled within the DAACCM system 200 and/or the security SE 214 may be temporarily disabled, in order to avoid any unnecessary (e.g., unimportant) attack detections.

In some examples, it is envisaged that the AC may be adjusted, for example in response to a software command, which may be adjusted according to the lifecycle of the SDV 210. For example, the processor 232 of the Attack Evaluation Laboratory 230 may recommend an adjustment of the AC 216 in order to avoid registering invalid attacks due to, say, extreme conditions of a manufacturing line (which is not a normal operation mode of the SDV 210). In this scenario, the operation of the AC 216 may be adapted by the security SE 214.

In some examples, it is envisaged that the AC may be adjusted according to the particular attack detected. For example, in an end of line (eol) production environment, the probability of triggering security sensors is typically high. In accordance with some examples, and since the DAACCM system 200 is aware that this is a controlled environment and blocking the access to the security SE 214 might hinder the time-critical end processes, the DAACCM system 200 may decide not to increment the AC 216. In this manner, the DAACCM system 200 may avoid affecting or reducing the functionality of the security SE 214. Thus, an attacker would be limited in the information that could be obtained by hacking the security SE 214. In contrast, the DAACCM system 200 may be configured to solely log the complete scenario as a countermeasure and then the log may be reviewed and analysed by the processor 232 of the Attack Evaluation Laboratory 230 before the SDV 210 exits the secure production facility.

Furthermore, in some examples, it is envisaged that a timer may be introduced, such that after a certain time has elapsed, and if the log had not been read, the DAACCM system 200 may limit the functionality of the system. In this situation, it may be deemed reasonable to assume that there is not an attacker that is constantly trying to hack the SE, but instead it may be assumed that it is a false attack in a controlled environment.

In additional and/or alternative examples, the operation of the AC 216 may be adapted by the security SE 214 due to a determination that the system is operating in an extreme environment. For example, the SDV 210 may be used in extreme cold or hot conditions, such as in a desert. It is envisaged that these different scenarios may thus lead to a triggering of a temperature sensor as measured temperatures may be more extreme than the sensor has been configured to allow, ultimately causing an attack. In accordance with some examples, and using the DAACCM system 200, a determination may be made that these triggers happen too often, and in response thereto the countermeasure for this special type of attack can be changed.

In additional and/or alternative examples, the operation of the AC 216 may be adapted by the security SE 214 due to a determination that the SDV 210 is being used in an extreme location (say, using GPS coordinates), and then accordingly a specific type of attack in a limited sensor range might not be recorded. One example approach would be that the potential attack may not be recorded due to a determination that the vehicle is operating at extreme temperatures, and therefore the expectation is that it may be a false attack reading due to, say, the sensor not working reliably at extreme temperatures. In this instance, it is envisaged that a new attack triggering mechanism may be pushed to the SE in a real time manner. Thus, it is envisaged that if any of the inputs change, then the countermeasures can be adjusted accordingly. A skilled artisan will appreciate that it is generally not appropriate to pre-program countermeasures into the vehicle based on the various possible security attack inputs as it is not easy to predict each and every condition that a vehicle may encounter in the field.

In additional and/or alternative examples, the operation of the AC 216 may be adapted by the security SE 214 in response to differentiating between an actual attack and normal usage. For example, if the AC 216 is triggered often, which may suggest that there is something suspicious happening, access to the vehicle may be blocked by an appropriate SE, in charge of the decision of whether (or not) a car shall be able to be opened or is locked. Therefore, in this example, it is important to facilitate a way to differentiate whether the triggering was due to an actual hacker attacking the SDV 210 or in the normal use of the vehicle/application. By evaluating the AC logs by the processor 232 of the Attack Evaluation Laboratory 230, and also the information from, say, a driver profile (consisting of the usual driving patterns, locations, phone connection, seat position, etc.), a decision may be taken by the the processor 232 of the Attack Evaluation Laboratory 230 as to whether (or not) the attacks should be ignored, or if further confirmation from the owner of the vehicle is required. Accordingly, a new AC triggering algorithm (employed in the host processor 217), or adapting the existing AC algorithm will be applied based on these inputs. In some examples, it is envisaged that the secure HSM 222 may include an encryption circuit arranged to encrypt AC recommendations provided by the Attack Evaluation Laboratory 230 that are being forwarded to the security SE 214, with the security SE 214 having a corresponding decryption circuit. In this manner, the system protects the recommendation information passing back to the SDV 210. Alternatively, in some examples, it is envisaged that the server processor 224 in the secure backend cloud server 220 may be arranged to analyse the decrypted attack logs and in response thereto provide at least one attack-related recommendation to at least one of: the central controller, the security SE. In this scenario, it is envisaged that the secure HSM 222 may include an encryption circuit arranged to encrypt AC recommendations provided by the server processor 224.

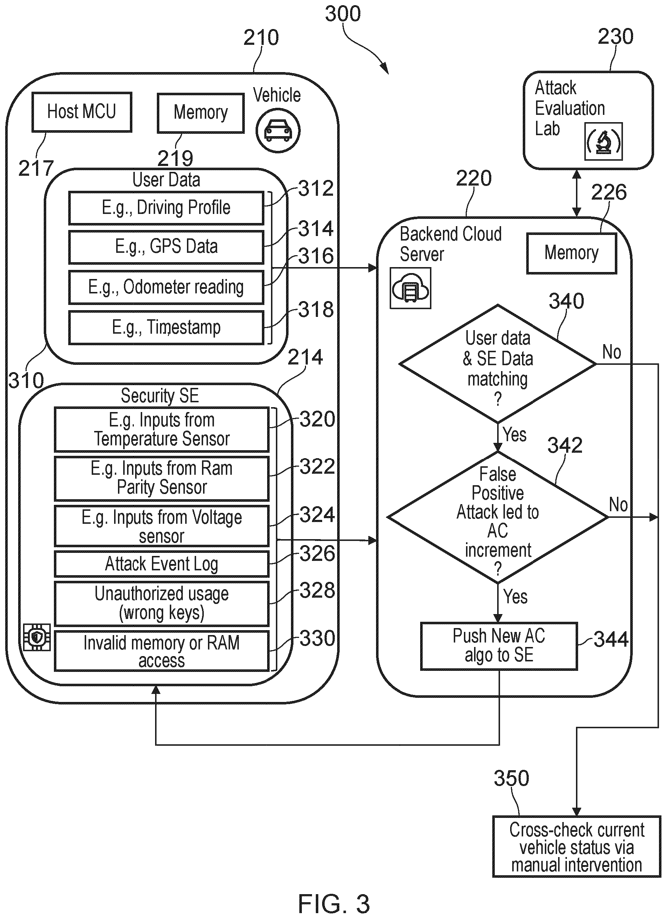

The use of SEs in SDVs is a recent development and the inventors have recognised and appreciated that many and varied SDV SEs may be usefully employed in examples herein described. Referring now to FIG. 3, FIG. 3 illustrates a further example of a DAACCM system 300 with a secure backend cloud server 220, according to some examples. In this example the secure backend cloud server 220 receives data from a plurality of different entities in the SDV 210, which in this example is two different entities: User data 310 and AC data (responsive to sensor inputs) from the Security SE 214. In this example, the user data may include many items of information, such as: driving profile 312, global positioning system (GPS) data 314, a vehicle odometer reading 316, a timestamp 318, etc. In this example, the sensor inputs received by or from within the security SE 214 may include one or more of many sensors, such as: inputs from a temperature sensor 320, inputs from a RAM parity sensor 322, inputs from a Voltage sensor 324, an attack event log 326, unauthorized usage (for example, incorrect passwords entered on a keyboard or keypad or a usage of wrong keys) 328, an invalid memory or RAM access 330, etc.

The secure backend cloud server 220 then links all the inputs that appear on the User data 310 and AC data together. FIG. 3 shows a flowchart, for example run by the HSM 222 in the secure backend cloud server 220 of FIG. 2, that links all the inputs at a decision in 340, by comparing/matching user data 310 and security SE 214 data with existing data stored in memory 226. Here, compared data related to this specific SDV 210, such as a unique driving profile 312, and sensor data 320-330 triggered by associated thresholds being exceeded, is then analysed to determine whether (or not) a false positive attack led to the increment of the AC 216 at 342. If a determination was that the attack was a false positive at 342, then a new AC algorithm (or new sensor thresholds) are sent to the security SE 214 at 344. If the determination was not that a false positive occurred, and hence a real attack is occurring, then a cross-check of the current status of the SDV 210 is made at 350, preferably via a manual intervention. The new AC algorithm (and/or new sensor thresholds) is/are sent to the security SE 214 at 344 in case the AC 216 or a sensor threshold may need to be adjusted to avoid causing any further false attacks 'in the field'.

The secure backend cloud server 220 may then share the result of the analysis with the Attack Evaluation Laboratory 230, in order for the Attack Evaluation Laboratory 230 to make a recommendation based on the user data (e.g., meta data) and the actual attack cause as identified by one or more sensor inputs 320-330. In some examples, the Attack Evaluation Laboratory 230 may make a decision to see if a new or updated AC algorithm needs to be pushed to the security SE 214. In some examples, the new or updated AC algorithm may be used to increase or decrease the sensitivity of the different sensors. If the final decision by the Attack Evaluation Laboratory 230, in this example and following an analysis that combines the meta data of the SDV 210 with a determined root cause of the attack, implies that real attacks have occurred, then an intervention of the SDV electronics is required, to avoid a potential recall by the manufacturer of the SDV.

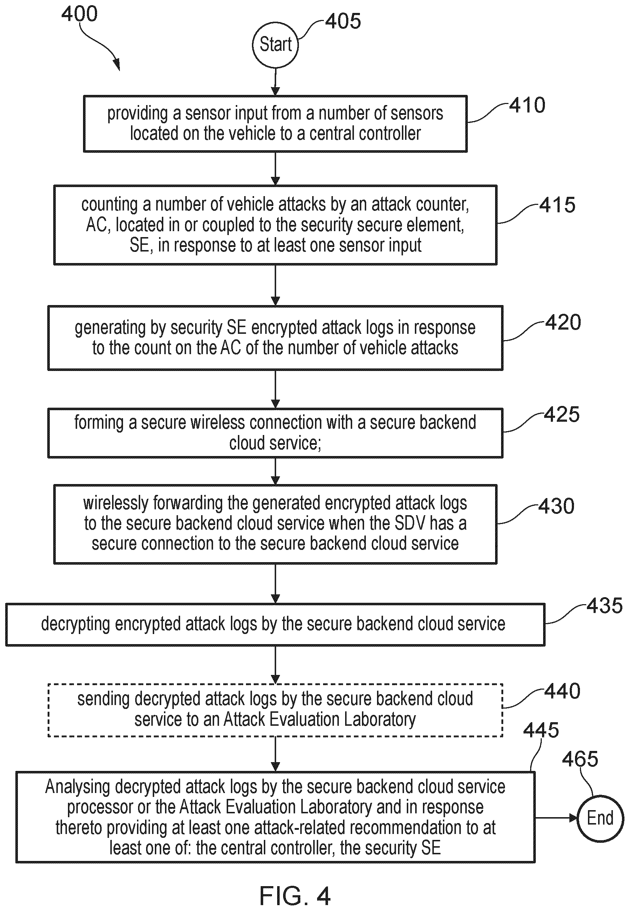

Referring now to FIG. 4, one example of a flowchart 400 for identifying an attack on a software defined vehicle (such as SDV 210 in FIG. 2) is illustrated, according to some examples herein described. The method starts at 405 and at 410 includes providing a sensor input from a number of sensors located on the vehicle to a central controller (such as central controller 212 in FIG. 2) comprising a security secure element, SE, ( such as security 214 in FIG. 2). At 415, the flowchart includes counting a number of vehicle attacks by an attack counter, located in or coupled to the security SE in response to at least one sensor input. At 420, the flowchart includes generating by security SE encrypted attack logs in response to the count on the AC of the number of vehicle attacks. At 425, the flowchart includes forming a secure wireless connection with a secure backend cloud server. At 430, the flowchart includes wirelessly forwarding the generated encrypted attack logs to the secure backend cloud server when the SDV has a secure connection to the secure backend cloud server. At 435 the flowchart includes decrypting encrypted attack logs by the secure backend cloud server. At 440 the flowchart includes optionally sending decrypted attack logs by the secure backend cloud server to an Attack Evaluation Laboratory. At 445, the flowchart includes analysing decrypted attack logs by the server processor (for example the server processor 224 of the secure backend cloud server 220) or the Attack Evaluation Laboratory and in response thereto providing at least one attack-related recommendation to at least one of: the central controller, the security SE. The flowchart ends at 465.

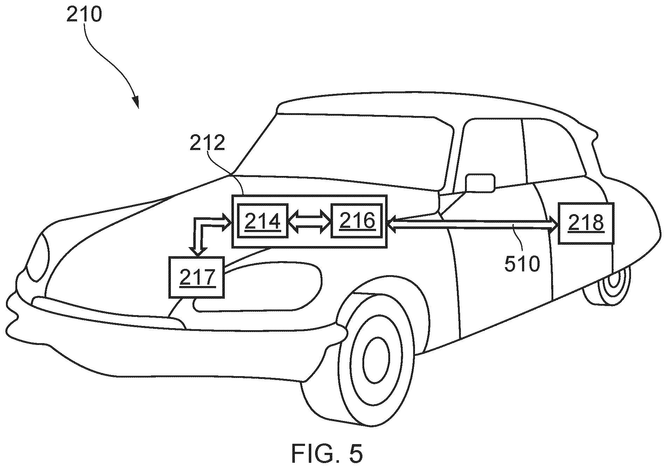

FIG. 5 illustrates one example of a SDV 210, such as an SDV, adapted according to some examples. Here, the SDV 210 includes a central controller 212. The central controller 212 that include a Security SE 214 that, in this example, includes an attack counter (AC) 216 arranged to count a number of vehicle attacks. In other examples, the Security SE 214 may be operably coupled to the AC 216. The Security SE 214 is connected to a host processor 217, which in turn is connected to a number of sensors 218 located around the SDV 210. In some examples, the SDV 210 may employ an intelligent transportation system 510 coupled to the central controller 212 with control signals controlled by the host processor 217.

In the foregoing specification, the invention has been described with reference to specific example embodiments. It will, however, be evident that various modifications and changes may be made therein without departing from the scope of the invention as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the system depicted herein is merely exemplary, and that in fact many other system variants can be implemented that achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example, in one example embodiment, the illustrated examples may be implemented as circuitry located on a single integrated circuit or within a same device.

In some examples, the various components within the SDV ECU can be realized in discrete or integrated component form, with an ultimate structure therefore being an application-specific or design selection. As the illustrated embodiments of the present invention may, for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention. A skilled artisan will appreciate that the level of integration of the host processor and/or SE circuits or components may be, in some instances, implementation-dependent.

Also, for example, the examples, or portions thereof, may implemented as soft or code representations of physical circuitry or of logical representations convertible into physical circuitry, such as in a hardware description language of any appropriate type. Also, the invention is not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A system (200, 300) arranged to identify an attack on a software defined vehicle, SDV (210), the system (200, 300) comprising:
a SDV (210) comprising a central controller (212) comprising:
a host processor (217);
a security secure element, SE, (214) operably coupled to the host processor (217) and comprising or operably coupled to an attack counter, AC, (216); and
a number of sensors located on the SDV (210) and operably coupled to the host processor (217) and the security SE (214);
wherein the AC (216) is arranged to count a number of SDV attacks in response to at least one sensor input and the security SE (214) is arranged to generate encrypted attack logs in response to the count by the AC (216) of the number of SDV attacks;
a secure backend cloud server (220) arranged to form a secure wireless connection with the central controller (212) and decrypt encrypted attack logs, wherein the secure backend cloud server (220) comprises or is operably coupled to a processor (224, 232);
wherein the central controller (212) is arranged to wirelessly forward the generated encrypted attack logs to the secure backend cloud server (220) when it has a secure connection to the secure backend cloud server (220); and
wherein the processor (224, 232) is arranged to analyse decrypted attack logs and in response thereto provide at least one attack-related recommendation to at least one of: the central controller (212), the security SE (214).

2. The system (200, 300) of Claim 1 wherein the secure backend cloud server (220) comprises a hardware security module, HSM, (222), arranged to perform decryption of received encrypted attack logs and store decrypted attack log information in cloud memory (226).

3. The system (200, 300) of Claim 2 wherein the HSM (222) is further arranged to perform encryption of the at least one attack-related recommendation sent to the at least one of: the central controller (212), the security SE (214).

4. The system (200, 300) of Claim 2 or Claim 3 wherein the HSM (222) is further arranged to filter out a new or irrelevant attack from the received encrypted attack logs by comparing attack details with known previous attack details.

5. The system (200, 300) of any preceding Claim wherein the secure backend cloud server (220) is operably coupled to an Attack Evaluation Laboratory (230) that comprises the processor (224, 232) arranged to analyse decrypted attack logs and in response thereto provide at least one attack-related recommendation to at least one of: the central controller (212), the security SE (214); and wherein the secure backend cloud server (220) is arranged to forward decrypted attack logs to the Attack Evaluation Laboratory (230) for analysis.

6. The system (200, 300) of any preceding Claim wherein the at least one attack-related recommendation includes at least one of: temporarily switch off the AC (216), re-configure the AC (216), temporarily switch of the security SE (214), provide a new or updated algorithm to be run by the security SE (214), re-configure a sensor or sensor threshold that is providing sensed data to the security SE (214).

7. The system (200, 300) of any preceding Claim wherein the central controller (212) is arranged to wirelessly forward the generated encrypted attack logs to the secure backend cloud server (220) according to one of: periodically, in response to a trigger, intermittently.

8. The system (200, 300) of any preceding Claim, wherein the number of sensors (218) includes one or more of: a random access memory, RAM, parity sensor, a voltage glitch sensor, a light sensor, low-high clock frequency sensor, low-high temperature sensor, low-high supply voltage sensor.

9. The system (200, 300) of any preceding Claim, wherein the secure backend cloud server (220) is arranged to receive data from a plurality of different entities in the SDV (210), wherein the data comprises at least: user data (310) and AC data from the security SE (214).

10. The system (200, 300) of Claim 9, wherein the user data includes at least one of the following: driving profile (312), global positioning system, GPS, data (314), a SDV odometer reading (316), a timestamp (318).

11. The system (200, 300) of Claim 9 or Claim 10 when dependent upon Claim 2, wherein the HSM (222) is coupled to memory (226) in the secure backend cloud server (220) and is arranged to compare user data (310) and security SE (214) data with existing user data (310) and security SE (214) data stored in the memory (226).

12. A method (400) for identifying an attack on a software defined vehicle, SDV (210), the method (400) comprising:
providing (410) a sensor input from a number of sensors located on the SDV (210) to a central controller (212) comprising a security secure element, SE, (214);
counting (415) a number of SDV attacks by an attack counter, AC, (216) located in or coupled to the security secure element, SE, (214) in response to at least one sensor input;
generating (420) by security SE (214) encrypted attack logs in response to the count on the AC (216) of the number of SDV attacks;
forming (425) a secure wireless connection with a secure backend cloud server (220);
wirelessly forwarding (430) the generated encrypted attack logs to the secure backend cloud server (220) when the SDV (210) has a secure connection to the secure backend cloud server (220);
decrypting (435) encrypted attack logs by the secure backend cloud server (220);
analysing (445) decrypted attack logs by a processor (224, 232) and, in response thereto,
providing at least one attack-related recommendation to at least one of: the central controller (212), the security SE (214).

13. The method (400) for identifying an attack on a SDV (210) of Claim 12, the method (400) further comprising storing decrypted attack log information in cloud memory (226); and wherein analysing (445) decrypted attack logs by a processor (224, 232) comprises comparing attack details with known previous attacks stored in the cloud memory (226); and filtering out a new or irrelevant attack from the received encrypted attack logs in response to a comparison of the attack details with known previous attacks; and wherein the method further comprises performing encryption of the at least one attack-related recommendation to be sent to at least one of: the central controller (212), the security SE (214).

14. The method (400) for identifying an attack on a SDV (210) of Claim 12 or Claim 13, wherein providing at least one attack-related recommendation to at least one of: the central controller (212), the security SE (214), comprises a recommendation of at least one of:
temporarily switching off the AC (216);
re-configuring the AC (216);
temporarily switching off the security SE (214);
providing a new or updated algorithm to be run by the security SE (214);
re-configuring a sensor or sensor threshold that is providing sensed data to the security SE (214).

15. A software defined vehicle, SDV (210), comprising the system of any of preceding Claims 1 to 11.

## Amended claims

### Amended claims in accordance with Rule 137(2) EPC.

1. A system (200, 300) arranged to identify an attack on a software defined vehicle, SDV (210), the system (200, 300) comprising:
a SDV (210) comprising a central controller (212) comprising:
a host processor (217);
a security secure element, SE, (214) operably coupled to the host processor (217) and comprising or operably coupled to an attack counter, AC, (216); and
a number of sensors located on the SDV (210) and operably coupled to the host processor (217) and the security SE (214);
wherein the AC (216) is arranged to count a number of SDV attacks in response to at least one sensor input and the security SE (214) is arranged to generate encrypted attack logs in response to the count by the AC (216) of the number of SDV attacks;
a secure backend cloud server (220) arranged to wirelessly receive generated encrypted attack logs from the central controller (212) when it has a secure connection, and decrypt the encrypted attack logs, wherein the secure backend cloud server (220) is operably coupled to and is arranged to forward decrypted attack logs to an Attack Evaluation Laboratory (230) for analysis that comprises or is operably coupled to a processor (224, 232) arranged to analyse decrypted attack logs and in response thereto provide at least one attack-related recommendation to at least one of: the central controller (212), the security SE (214); and
wherein the at least one attack-related recommendation includes at least one of:
temporarily switch off the AC (216),
re-configure the AC (216),
temporarily switch of the security SE (214),
provide a new or updated algorithm to be run by the security SE (214),
re-configure a sensor or sensor threshold that is providing sensed data to the security SE (214).

2. The system (200, 300) of Claim 1 wherein the secure backend cloud server (220) comprises a hardware security module, HSM, (222), arranged to perform decryption of received encrypted attack logs and store decrypted attack log information in cloud memory (226).

3. The system (200, 300) of Claim 2 wherein the HSM (222) is further arranged to perform encryption of the at least one attack-related recommendation sent to the at least one of: the central controller (212), the security SE (214).

4. The system (200, 300) of Claim 2 or Claim 3 wherein the HSM (222) is further arranged to filter out a new or irrelevant attack from the received encrypted attack logs by comparing attack details with known previous attack details.

5. The system (200, 300) of any preceding Claim wherein the central controller (212) is arranged to wirelessly forward the generated encrypted attack logs to the secure backend cloud server (220) according to one of: periodically, in response to a trigger, intermittently.

6. The system (200, 300) of any preceding Claim, wherein the number of sensors (218) includes one or more of: a random access memory, RAM, parity sensor, a voltage glitch sensor, a light sensor, low-high clock frequency sensor, low-high temperature sensor, low-high supply voltage sensor.

7. The system (200, 300) of any preceding Claim, wherein the secure backend cloud server (220) is arranged to receive data from a plurality of different entities in the SDV (210), wherein the data comprises at least: user data (310) and AC data from the security SE (214).

8. The system (200, 300) of Claim 7, wherein the user data includes at least one of the following: driving profile (312), global positioning system, GPS, data (314), a SDV odometer reading (316), a timestamp (318).

9. The system (200, 300) of Claim 7 when dependent upon Claim 2, or of Claim 8 when dependent upon Claim 2, wherein the HSM (222) is coupled to memory (226) in the secure backend cloud server (220) and is arranged to compare user data (310) and security SE (214) data with existing user data (310) and security SE (214) data stored in the memory (226).

10. A method (400) for identifying an attack on a software defined vehicle, SDV (210), the method (400) comprising:
providing (410) a sensor input from a number of sensors located on the SDV (210) to a central controller (212) comprising a security secure element, SE, (214);
counting (415) a number of SDV attacks by an attack counter, AC, (216) located in or coupled to the security secure element, SE, (214) in response to at least one sensor input;
generating (420) by security SE (214) encrypted attack logs in response to the count on the AC (216) of the number of SDV attacks;
forming (425) a secure wireless connection with a secure backend cloud server (220);
wirelessly forwarding (430) the generated encrypted attack logs to the secure backend cloud server (220) when the SDV (210) has a secure connection to the secure backend cloud server (220);
decrypting (435) encrypted attack logs by the secure backend cloud server (220); forward decrypted attack logs to an Attack Evaluation Laboratory (230) for analysis;
analysing (445) decrypted attack logs by a processor (224, 232) and, in response thereto,
providing at least one attack-related recommendation to at least one of: the central controller (212), the security SE (214); and
wherein the at least one attack-related recommendation includes at least one of:
temporarily switching off the AC (216),
re-configuring the AC (216),
temporarily switching of the security SE (214),
providing a new or updated algorithm to be run by the security SE (214),
re-configuring a sensor or sensor threshold that is providing sensed data to the security SE (214).

11. The method (400) for identifying an attack on a SDV (210) of Claim 10, the method (400) further comprising storing decrypted attack log information in cloud memory (226); and wherein analysing (445) decrypted attack logs by a processor (224, 232) comprises comparing attack details with known previous attacks stored in the cloud memory (226); and filtering out a new or irrelevant attack from the received encrypted attack logs in response to a comparison of the attack details with known previous attacks; and wherein the method further comprises performing encryption of the at least one attack-related recommendation to be sent to at least one of: the central controller (212), the security SE (214).

12. A software defined vehicle, SDV (210), comprising the system of any of preceding Claims 1 to 9.
